(19)

Europäisches
Patentamt
European
Patent Office
Office européen
des brevets

(11) **EP 2 339 298 A2**

(12) **EUROPEAN PATENT APPLICATION**

(43) Date of publication:
**29.06.2011 Bulletin 2011/26**

(51) Int Cl.:
***G01C 21/36*** (2006.01)

(21) Application number: **10196129.0**

(22) Date of filing: **21.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br> • **Terai, Takao**<br>  **TOKYO Tokyo 108-0075 (JP)**<br> • **Nezu, Yoshiyuki**<br>  **TOKYO Tokyo 108-0075 (JP)** |
| (30) Priority: **28.12.2009 JP 2009298944** | (74) Representative: **Körber, Martin Hans**<br>**Mitscherlich & Partner**<br>**Patent- und Rechtsanwälte**<br>**Sonnenstraße 33**<br>**80331 München (DE)** |
| (71) Applicant: **Sony Corporation**<br>**Tokyo 108-0075 (JP)** | |

(54) **Navigation device, movement history recording method, and non-transitory computer program storage device**

(57)     A navigation device, method and computer program storage device cooperate to seamlessly provide electronic navigational assistance, despite the user electing to use different modes to transportation, such as motored vehicle, by foot, or by bicycle, for example during a single trip. In addition to prospective (forward looking) navigation assistance, retrospective assistance is offered as well by the device collecting and storing actual traversal path of the device even when multiple modes of transportation are used in a single trip.

FIG. 13

EP 2 339 298 A2

**Description**

BACKGROUND OF THE INVENTION

1. Field of the Invention

The present invention relates to a navigation device, a movement history recording method, and a non-transitory computer program storage device.

2. Description of the Related Art

Hitherto, navigation devices have been installed in vehicles which move and the like, so as to present to the user the current position of the user, routes to a destination, and so forth. Also, there have been disclosed technology for using navigation devices not only in a vehicle but taking navigation devices out of vehicles and using them in a portable setting (e.g., Japanese Unexamined Patent Application Publication Nos. 2001-3179472 and 2002-31538).

The above-mentioned Japanese Unexamined Patent Application Publication Nos. 2001-3179472 and 2002-31538 disclose performing navigation suitable for a vehicle when using in a vehicle, and performing navigation suitable for a pedestrian when using outside of a vehicle. Specifically, display ranges of maps used for navigation are changed between a vehicle mode used in a vehicle and an out-of-vehicle mode used when out of a vehicle.

SUMMARY

However, navigation devices are used not only in vehicles and when walking, but also when riding bicycles and motorcycles, so it is desirable to perform navigation suitable for the modes of a bicycle mode, motorcycle mode, vehicle mode, and pedestrian mode and so forth, not just the vehicle mode and out-of-vehicle mode. Further, there has been a demand for confirming movement histories such as movement paths and movement distances for each mode in cases where multi-mode navigation is performed, switching from one mode to the next.

There has been found demand to provide a new and improved navigation device, movement history recording method, and program storage device, capable of switching to various navigation modes which the user desires, and managing movement histories for each of the navigation modes.

Configurations described herein enable switching to navigation modes which the user desires, and managing movement histories for each of the navigation modes.

BRIEF DESCRIPTION OF THE DRAWINGS

Fig. 1 is an explanatory diagram describing the overview of an embodiment;

Fig. 2 is an external view of a PND (Personal Navigation Device) according to a first embodiment;

Fig. 3 is a block diagram illustrating the functional configuration of the PND according to the embodiment;

Fig. 4 is an explanatory diagram describing selection operations of navigation modes according to the embodiment;

Fig. 5 is an explanatory diagram describing selection operations of navigation modes according to the embodiment;

Fig. 6 is an explanatory diagram illustrating a coordinate system around the PND according to the embodiment;

Fig. 7 is an explanatory diagram describing movement history information according to the embodiment;

Fig. 8 is an explanatory diagram describing movement history information according to the embodiment;

Fig. 9 is an explanatory diagram describing a display example of log data by navigation mode according to the embodiment;

Fig. 10 is a display example of a list of history data by navigation mode according to the embodiment;

Fig. 11 is a display example of history data by navigation mode according to the embodiment;

Fig. 12 is an explanatory diagram describing switching of display according to the embodiment;

Fig. 13 is a flowchart illustrating details of operations of the PND according to the embodiment;

Fig. 14 is an external view of a cellular phone according to a second embodiment; and

Fig. 15 is a block diagram illustrating the functional configuration of the cellular phone according to the embodiment.

DESCRIPTION OF THE PREFERRED EMBODIMENTS

Preferred embodiments of the present invention will be described in detail below with reference to the drawings. Note that in the present specification and drawings, components which are substantially of the same functional configuration are denoted with the same reference numerals, thereby avoiding redundant description. Embodiments will be described following the order shown below.

1. Concept
2. Overview
3. First Embodiment
3-1. Hardware Configuration of PND
3-2. Functional Configuration of PND
3-3. Detailed Operations of PND
4. Second Embodiment

1. Concept

One concept of an embodiment of the present invention will be described first. In related art, navigation devices have been installed in vehicles which move and so forth, so as to present to the user the current position of the user, routes to a destination, and so forth. Also, there have been disclosed techniques for using navigation devices not only in a vehicle but taking navigation devices out of vehicles and using in a mobile setting.

With the above techniques, arrangements can be made for performing navigation suitable for a vehicle when using in a vehicle, and performing navigation suitable for a pedestrian when using outside of a vehicle. Specifically, display ranges of maps used for navigation are changed between a vehicle mode used in a vehicle and an out-of-vehicle mode used when out of a vehicle.

However, navigation devices are used not only in vehicles and when walking, but also when riding bicycles and motorcycles, so it is desirable to perform navigation suitable for the modes of a bicycle mode, motorcycle mode, and so forth, not just the vehicle mode and out-of-vehicle mode. Further, there has been demand for confirming movement histories such as movement paths and movement distances for each mode in cases where navigation is switched among the modes. The navigation device according to an embodiment of the present invention enables switching to navigation modes which the user desires and managing movement histories for each of the navigation modes.

2. Overview

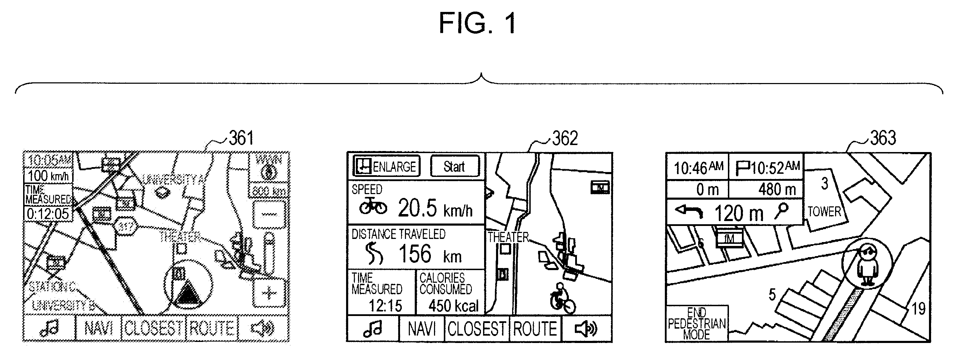

Next, an overview of an embodiment of the present invention will be described with reference to Fig. 1. Fig. 1 is an explanatory diagram describing an overview of the embodiment. As described above, the navigation device according to an embodiment of the present invention performs navigation in various modes such as a vehicle mode, bicycle mode, pedestrian mode, and so forth. These modes will be referred to as navigation modes in the following discussion. Navigation executed by the navigation device according to an embodiment of the present invention involves presenting the user with a path from the current position to a destination. Specifically, this involves calculating the current position based on GPS (Global Positioning System) signals transmitted from a GPS satellite, and indicating the position and direction of travel of the user on a map screen.

As shown in Fig. 1, the navigation device according to an embodiment of the present invention changes map displays or current position marks in accordance with the navigation modes. For example, display example 361 is a display example at the time of performing navigation in the vehicle mode, in which navigation is performed displaying a wide-range map. Also, display example 362 is a display example at the time of performing navigation in the bicycle mode, in which navigation is performed displaying a map of a range narrower than in the vehicle mode. Further, display example 363 is a display example at the time of performing navigation in the pedestrian mode, in which navigation is performed displaying a map of a range narrower than in the bicycle mode.

Also, in the vehicle mode the current position is displayed with a triangle, in the bicycle mode the current position is displayed with a bicycle mark (or icon), and in the pedestrian mode the current position is displayed with a person mark. Fig. 1 illustrates a display example of a case wherein navigation is performed in a vehicle mode, bicycle mode, and pedestrian mode, but embodiments of the present invention are not restricted to this example, and other navigation modes can be applied, such as a motorcycle mode, jogging mode, and so on. The user can select a desired navigation mode from multiple navigation modes by pressing a navigation mode switching button or the like on the navigation device.

Also, with the navigation device according to the present embodiment, information of movement history can be managed according to navigation mode. Information of movement history is, for example, movement paths, movement distance, and so forth. For example, in the event that the user has installed the navigation device in a vehicle and moved, navigation is performed in the vehicle mode, and the path and distance over which the vehicle has moved is recorded as movement history. Also, in the event that the user has installed the navigation device on a bicycle and moved or has ridden the bicycle while carrying the navigation device, navigation is performed in the bicycle mode, and the path and distance over which the bicycle has moved is recorded as movement history. In association with the path, the data saved with the navigation history includes one or both of distance and speed.

For example, as indicated by display example 362, in the event that the user has selected the bicycle mode, navigation is performed in the bicycle mode. Also, the movement path and movement distance while navigation is being performed in the bicycle mode are recorded as movement history, and the speed, distance traveled, time traveled, and so forth in the bicycle mode, are displayed along with the navigation display.

Thus, the navigation device according to the present embodiment enables switching to a navigation mode which the user desires and performing navigation in that navigation mode. Further, movement history can be recorded for each navigation mode, and information of the movement history can be displayed along with the navigation display. This concludes the overview of the navigation device.

3. First Embodiment

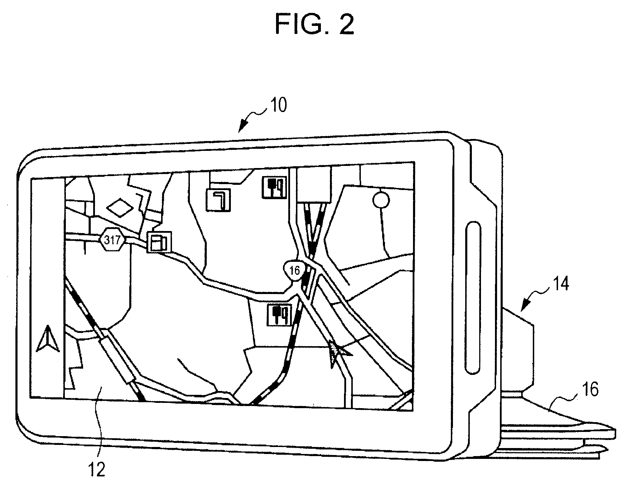

Next, a navigation device according to a first embodiment will be described with reference to Figs. 2 through 13. With the present embodiment, the navigation device will be described as being applied to a PND (Personal Navigation Device) 10 shown in Fig. 2.

3-1. Hardware Configuration of PND

As shown in Fig. 2, a PND 10 has a display unit 12 provided on the front face of the device. The PND 10 performs navigation by displaying actual images and the like corresponding to map data stored in built-in non-volatile memory (not shown) on the display unit 12. Also, the PND 10 may have a cradle 14 and suction cup 16. The cradle 14 and suction cup 16 are necessary for mounting the PND 10 to a vehicle dashboard in the event of using the PND 10 in a vehicle. The cradle 14 is mounted to the dashboard of the vehicle by way of the suction cup 16, and is mechanically and electrically connected to the PND 10. The PND 10 can operate using electric power supplied from the vehicle via the cradle 14.

In the event of a user using the PND 10 while walking, the cradle 14 and suction cup 16 configuration do not have to be included. In the event of the user using the PND 10 while walking, the user carries the PND 10 alone. Also, in the event of using the PND 10 while walking, the user may carry the PND 10 alone in the same way as when walking, or the cradle 14 and suction cup 16 may be attached to the handlebars of the bicycle so as to be used while moving.

As described above, pressing a navigation mode switching button (not shown) on the PND 10 selects a desired navigation mode from the multiple navigation modes. For example, in the event of using the PND 10 in a vehicle a selection operation is made for the vehicle mode, in the event of using the PND 10 on a bicycle a selection operation is made for the bicycle mode, and in the event of using the PND 10 while walking a selection operation is made for the pedestrian mode.

Upon the desired navigation mode being selected by user operations, the PND 10 performs navigation in the selected navigation mode. The PND 10 has a function for obtaining the current position, so a map including the current position is displayed on the display unit 12, and navigation is performed by superimposing the current position and direction of travel of the user on the displayed map.

Further, the PND 10 has a function for managing movement history information such as movement path and movement distance and so forth, for each navigation mode. That is to say, the PND 10 records the movement history such as movement path and movement distance and so forth for each navigation mode, and displays the movement history for each navigation mode on the display unit 12. A movement path corresponds with an actual navigation path taken by the PND 10, regardless whether the PND 10 was placed in different navigation modes on a single trip. For example, a trip involving a first segment where the PND 10 was used in a motor vehicle, may also include another or additional segments using other transportation modes, such as bicycle, public transportation or by foot. In such cases of multi-mode navigation, the PND 10 records an actual navigation route that was actually traversed, along with the navigation mode used for each segment of the actual navigation route. In the case of multiple navigation modes, the actual navigation route would be a composite route that includes multiple segments, each segment having an associated navigation mode. The recording of the composite route includes not on the path information but also the associated mode, as well as other optional data, such a distance, time, etc.

3-2. Functional Configuration of PND

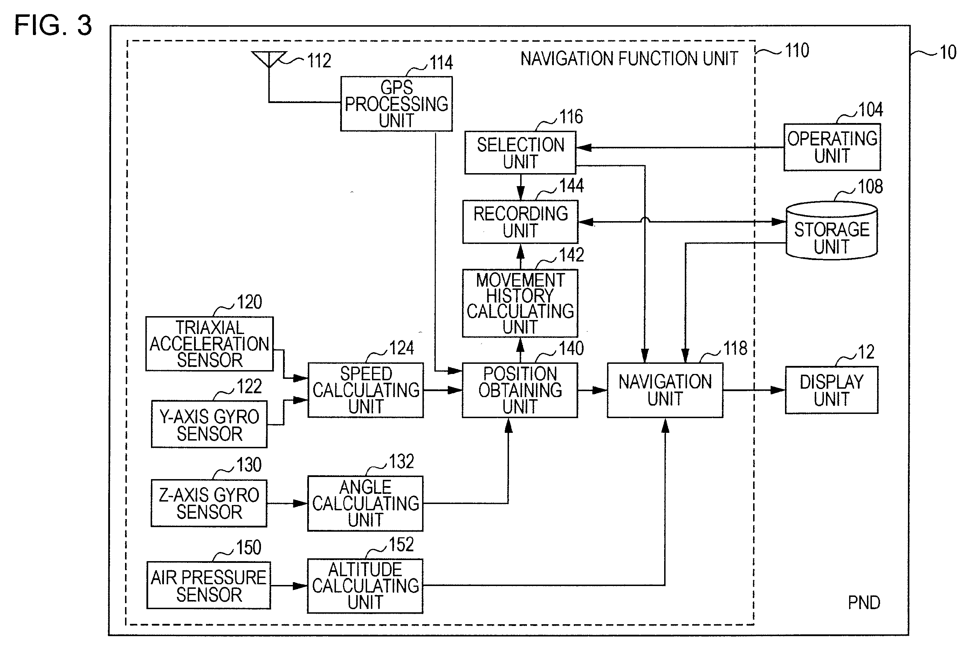

The above has been a description of the hardware configuration of the PND 10. Next, the functional configuration of the PND 10 will be described with reference to Fig. 3. As shown in Fig. 3, the PND 10 has a display unit 12, an operating unit 104, a storage unit 108, a navigation function unit 110, and so forth.

The operating unit 104 detects user operations, and outputs what has been detected as operations to the navigation function unit 110. Examples of operations made by the user include selection of navigation mode, setting of a destination, zooming in/out on a map, displaying of the current position, setting audio guidance, and making screen display settings.

Also, the operating unit 104 may be a touch panel or touch screen integrally provided with the display unit 12. Further, the operating unit 104 may be of a physical configuration provided separately from the display unit 12, such as buttons, switches, levers, dials, or the like. Further, the operating unit 104 may be a signal reception unit which detects signals indicating user operations transmitted from a remote controller.

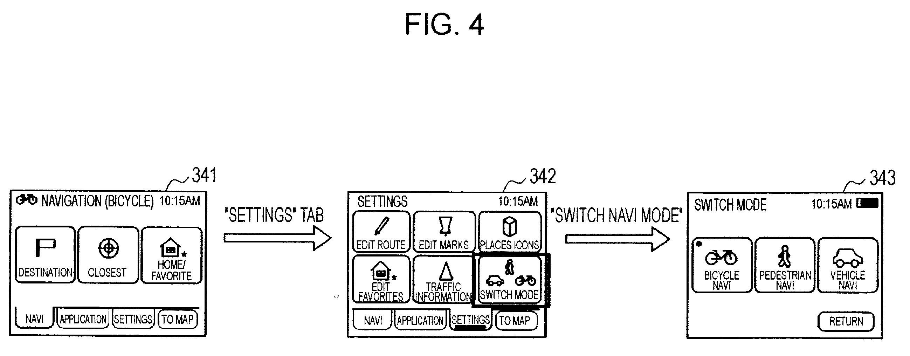

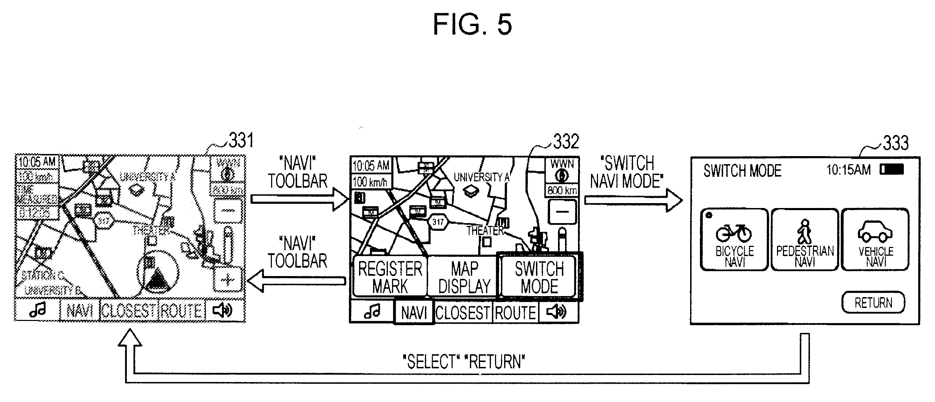

Now, selection operations of navigation modes performed by the user will be described with reference to Figs. 4 and 5. Figs. 4 and 5 are explanatory diagrams for describing selection operations for navigation modes. With Figs. 4 and 5, description will be made regarding a case wherein the operating unit 104 is provided integrally with the display unit 12.

As shown in Fig. 4, a "settings" tab is selected by user operations from the display items on a menu screen 341 displayed on the touch panel. Upon the "settings" tab being displayed, an "edit/settings display screen" 342 is displayed. Upon the user touching a "switch mode" button, a "navi mode switching screen" 343 whereby the navigation mode can be switched is displayed. The user touches one of the mode buttons from "vehicle navi" (vehicle mode), "bicycle navi" (bicycle mode), and "pedestrian navi" (pedestrian mode), thereby selecting the desired navigation mode.

Also, as shown in Fig. 5, an arrangement may be made wherein, during navigation being performed, an operation is performed to switch the navigation mode currently being performed to another navigation mode. As shown in Fig. 5, during navigation being performed in the vehicle mode, the "navi" tool bar displayed on the map screen 331 of the vehicle mode is selected. Upon the "navi" tool bar being selected, a guide/point screen 332 is displayed.

The user touches the "switch mode" button displayed on the guide/point screen 332. Upon the user touching the "switch mode" button on the guide/point screen 332, a navi mode switching screen 333 is displayed. The user touches one of the mode buttons from "vehicle navi" (vehicle mode), "bicycle navi" (bicycle mode), and "pedestrian navi" (pedestrian mode) displayed on the navi mode switching screen 343, thereby selecting the desired navigation mode.

Returning to Fig. 3, we will continue description of the functional configuration of the PND 10. The storage unit 108 stores programs for the PND 10 to run, information of movement history for each navigation mode, setting information for each navigation mode, and so forth. Examples of setting information for each navigation mode may include various types of settings information such as map data or audio volume data corresponding to the navigation mode, screen brightness data, and so forth.

Note that the storage unit 108 may be a storage medium such as non-volatile memory, a magnetic disk, an optical disc, an MO (Magneto Optical) disc, or the like. Examples of non-volatile memory include EEPROM (Electrically Erasable Programmable Read-Only Memory) and EPROM (Erasable Programmable ROM). Examples of a magnetic disc include hard disks, disc-shaped magnetic material disks, and so forth. Also, optical discs include CD (Compact Disc), DVD-R (Digital Versatile Disc Recordable), BD (Blu-Ray Disc (a registered trademark)), and so forth.

The navigation function unit 110 is a configuration for realizing navigation functions, and includes a GPS antenna 112, a GPS processing unit 114, a selection unit 116, a navigation unit 118, a triaxial acceleration sensor 120, a y-axis gyro sensor 122, a speed calculating unit 124, a z-axis gyro sensor 130, an angle calculating unit 132, a position obtaining unit 140, a movement history calculating unit 142, a recording unit 144, an air pressure sensor 150, and an altitude calculating unit 152.

Of these, the GPS processing unit 114, selection unit 116, navigation unit 118, angle calculating unit 132, position obtaining unit 140, a movement history calculating unit 142, altitude calculating unit 152, and so forth, are configured of a CPU (Central Processing Unit), for example.

The GPS antenna 112 receives GPS signals transmitted from man-made satellites traveling above the earth, and supplies the received GPS signals to the GPS processing unit 114. Note that the GPS signals include path information indicating the path of the man-made satellite, information such as the point-in-time of transmission of signals, and so forth.

The GPS processing unit 114 calculates the position of each man-made satellite from the path information included in each of the GPS signals. The GPS processing unit 114 then uses a set of simultaneous equations to calculate the current three-dimensional position based on the positions of the man-made satellites and the difference between the point-in-time of transmission of the GPS signals and the point-in-time of reception thereof.

The selection unit 116 has a function for selecting one navigation mode from the multiple navigation modes. As described above, the navigation mode is selected by way of the operating unit 104. The selection unit 116 selects navigation modes selected by the user by way of the operating unit 104, switches navigation modes, and so forth. The selection unit 116 supplies information of the selected navigation mode to the navigation unit 118.

While an arrangement is described above wherein the navigation mode is selected in accordance with user operations, embodiments of the present invention are not restricted to this example, and an arrangement may be made wherein the navigation mode is switched by detecting vibrations, or wherein electrical contact with a cradle to which it has been attached is detected, so as to automatically select an appropriate navigation mode.

The navigation unit 118 performs navigation in the navigation mode selected by the selection unit 116, based on the current position obtained by the later-described position obtaining unit 140. The navigation unit 118 is an example of the executing unit mentioned in the Summary of the Invention. For example, the navigation unit 118 reads out map data corresponding to the navigation mode from the storage unit 108, and superimposes a current position mark on the map image including the current position. As described above, setting information corresponding to the navigation mode is stored in the storage unit 108. The navigation unit 118 obtains setting information corresponding to the navigation mode selected by the selection unit 116 from the storage unit 108, and performs navigation using the set information.

In the event that the GPS antenna 112 does not receive GPS signals from the man-made satellite, the GPS processing unit 114 does not calculate the current position based on GPS signals. In this case, the navigation unit 118 performs navigation using the current position obtained by another method. For example, the navigation unit 118 can perform navigation using the current position obtained by the sensors and calculating units described later.

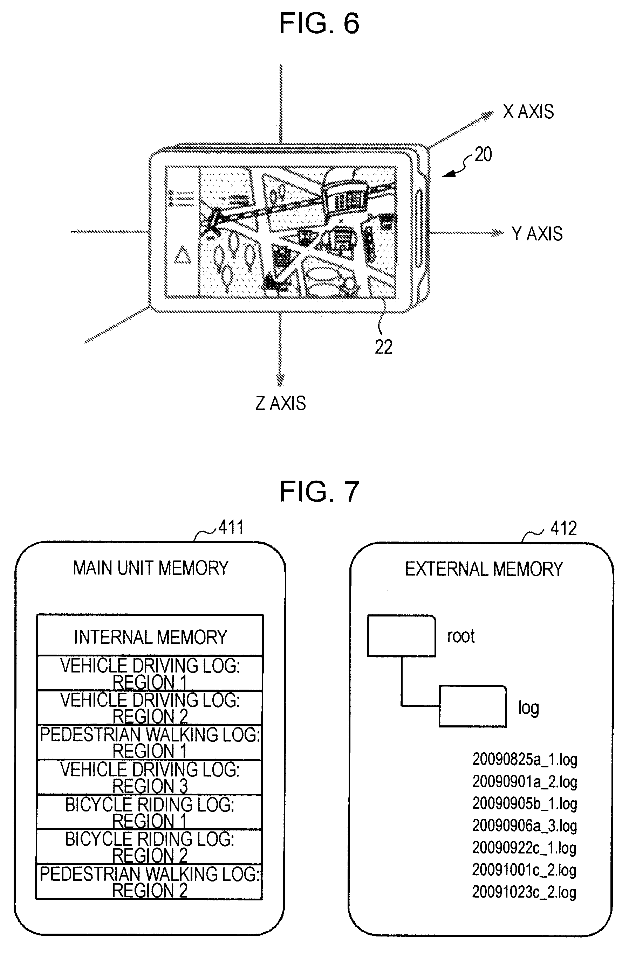

The triaxial acceleration sensor 120 detects the X-axial direction acceleration $\alpha$x, Y-axial direction acceleration $\alpha$y, and Z-axial direction acceleration $\alpha$z, shown in Fig. 6, with a sampling frequency of 50 Hz, for example. Note that as shown in Fig. 6, the X axis corresponds to the direction in which the vehicle travels, the Y axis corresponds to the horizontal direction orthogonal to the X axis, and the Z axis corresponds to the vertical direction.

The y-axis gyro sensor 122 detects the pitch rate ωy which is the angular speed around the Y axis, with a sampling frequency of 50 Hz, for example. The speed calculating unit 124 calculates speed V as to the direction of travel following the Expression I below, based on the Z-axial direction acceleration αz detected by the triaxial acceleration sensor 120 and the pitch rate ωy detected by the y-axis gyro sensor 122, 50 times a second, for example.

Expression 1

$$V = \frac{\alpha_z}{\omega_y}$$

The z-axis gyro sensor 130 detects the yaw rate ωz which is the angular speed around the Z axis when the PND 10 or vehicle is turning counter-clockwise, with a sampling frequency of 50 Hz, for example. The angle calculating unit 132 multiplies the yaw rate ωz detected by the z-axis gyro sensor 130 by the sampling frequency (e.g., 0.02 seconds), thereby calculating the turning angle θ of the PND 10 or the vehicle.

The position obtaining unit 140 obtains the amount of change from the position at the previous time of calculation to the current position, based on the speed V as to the direction of travel that has been calculated by the speed calculating unit 124 and the turning angle θ calculated by the angle calculating unit 132. The position obtaining unit 140 then obtains the current position by applying this amount of change to the position at the previous time of calculation. Also, in the event that the current position information has been calculated by the GPS processing unit 114, this position information is obtained. The position obtaining unit 140 is an example of the obtaining unit mentioned in the Summary.

The movement history calculating unit 142 has a function for calculating the movement path and movement distance based on position information obtained from the navigation unit 118 having started navigation till navigation ending. The movement history calculating unit 142 provides the calculated movement path and movement distance to the recording unit 144.

The recording unit 144 has a function to record, in the storage unit 108, the movement information such as movement path and movement distance calculated by the movement history calculating unit 142, and the navigation mode selected by the selection unit 116, in a correlated manner. For example, in the event that the bicycle mode has been selected by user operations and navigation has been started, the movement path and movement distance in the bicycle mode is recorded. For example, in the event that the user has transferred from a vehicle to a bicycle and traveled, the movement history information in the vehicle mode and the movement history information in the bicycle mode are recorded separately.

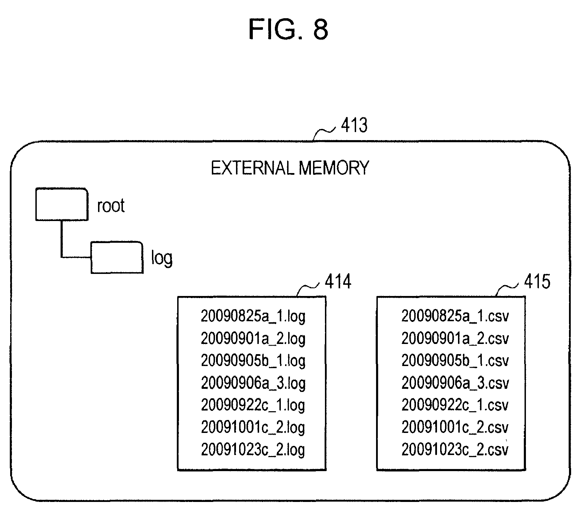

Now, the movement history information stored in the storage unit 108 by the recording unit 144 will be described with reference to Figs. 7 and 8. Figs. 7 and 8 are explanatory diagrams describing the movement history information. As shown in Fig. 7, in the event of recording movement history information in main unit memory 411, the recording unit 144 records the movement history information calculated by the movement history calculating unit 142 for each navigation mode. In Fig. 7, the traveling log (movement history) is recorded in predetermined regions for each navigation mode.

For example, the log data is recorded for each navigation mode, so that a program can read which region records traveling logs for which navigation mode, such as "vehicle driving log: region 1", "vehicle driving log: region 2", "pedestrian walking log: region 1", "bicycle riding log: region 1", and so on. Also, an arrangement may be made wherein the log data is provided with different headers for each navigation mode so as to be distinguishable. Also, in the event that an operating system (OS) is installed which has a file system, which navigation mode the traveling log belongs to can be distinguished by the file name or suffix of each log data.

Also, in the event of recording movement history information in external memory 312, the recording unit 144 gives a different file name to each log data so as to be recorded with the navigation mode distinguished. For example, a name may be added to date information for distinguishing the navigation mode. For example, we will say that "a" is a name indicating the vehicle mode, "b" indicating the bicycle mode, and "c" indicating the pedestrian mode. As shown in the external memory 412 in Fig. 7, "20090825a_l.log" indicates log data in the vehicle mode from August 25, 2009. Also, "20090905b_1.log" indicates log data in the bicycle mode from September 5, 2009. Similarly, "20090922c_1.log" indicates log data in the pedestrian mode from September 22, 2009.

Thus, recording the log data in the main unit memory and external memory according to navigation mode enables the movement history information to be managed according to the navigation mode. Specifically, history data such as the movement distance and movement speed can be calculated for each navigation mode using the log data, so as to record the history data according to navigation mode, and present to the user.

For example, as shown in Fig. 8, history data 415 such as movement distance and movement speed is recorded along with the log data 414. The history data 415 includes data whereby not only movement distance and movement speed but also maximum speed, minimum speed, average speed, speed per kilometer, calories consumed, and so forth, can be calculated based on the log data 414. The file name of the history data 415 has the date and navigation mode name added in the same way as with the log data 414. That is to say, the log data 414 and history data 415 are recorded in a correlated manner. The log data 414 and history data 415 are an example of movement history information mentioned in the Summary.

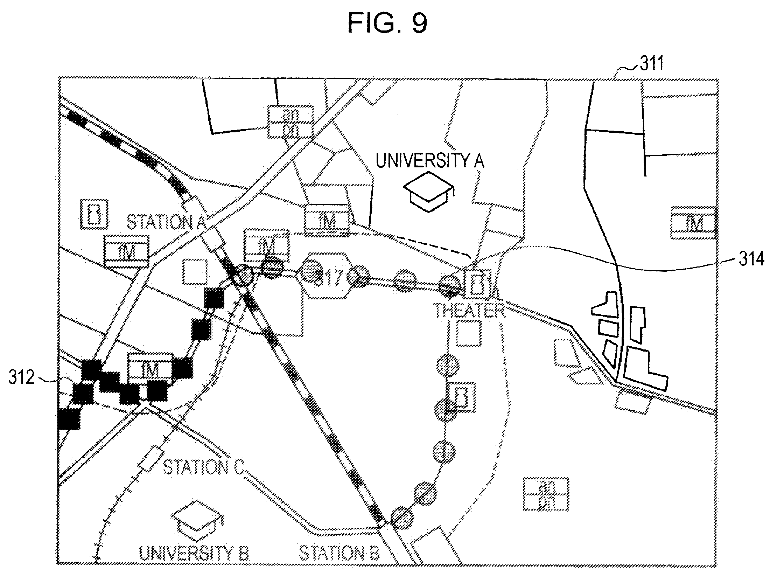

Also, the above-described navigation unit 118 has a function to display movement history information such as movement distance and movement speed on the display unit 12 according to navigation mode. Now, an example of displaying log data by navigation mode will be described with reference to Fig. 9. Fig. 9 is an explanatory diagram for describing a display example of log data by navigation mode.

As shown in Fig. 9, when displaying log data on the map, the navigation unit 118 displays the color, shape, or the like, of the display mark, for each navigation mode. For example, the display mark 312 included in the display example 311 is a square mark, representing the log data of the vehicle mode. Also, the display mark 314 is a circular mark, representing the log data of the bicycle mode. Also, an arrangement may be made wherein the log data of the vehicle mode and the log data of the bicycle mode are distinguished by changing the color of the display mark 312 and the display mark 314.

Also, the navigation unit 118 may display a list of history data by navigation mode on the display unit 12. The navigation unit 118 obtains the movement history information stored in the storage unit 108 and displays it on the display unit 12.

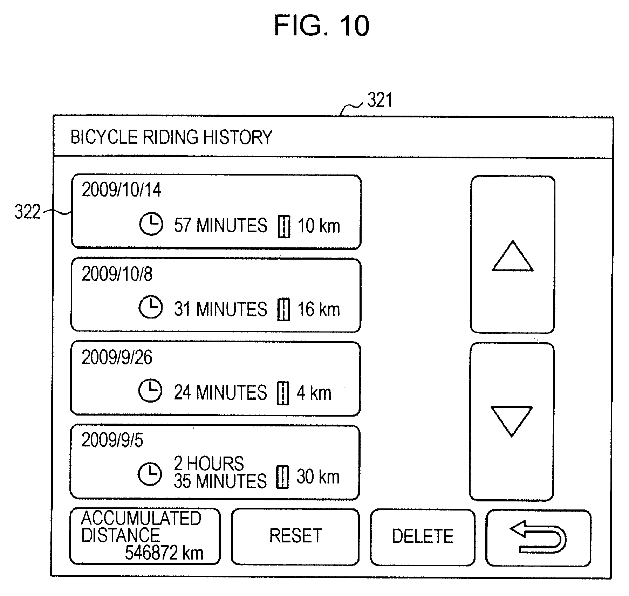

Fig. 10 is a display example of a list of history data by navigation mode. As shown in Fig. 10, a list of history data 322 in the bicycle mode may be displayed as "bicycle riding history". Accordingly, the user can recognize just the history data in the bicycle mode. Also, the accumulated distance in the bicycle mode may be displayed on the display unit 12 along with the history data 322 in the bicycle mode.

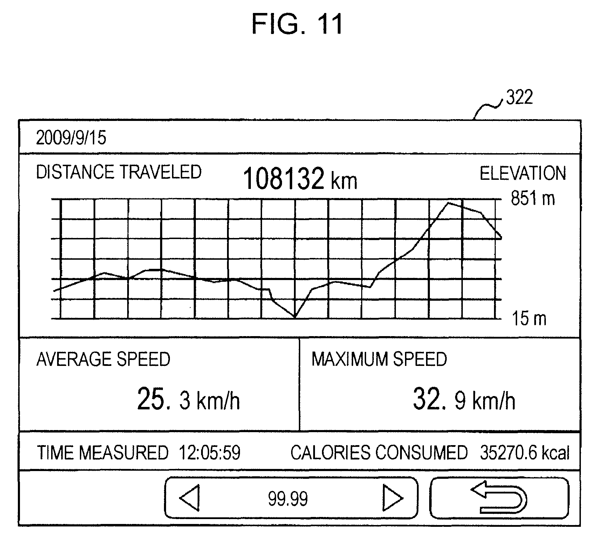

Also, the navigation device 118 may be arranged to collectively display various types of history data, such as distance traveled, average speed, maximum speed, calories consumed, and so forth, by navigation mode, on the display unit 12. Fig. 11 is a display example of history data by navigation mode. As shown in Fig. 11, distance traveled, average speed, maximum speed, measurement time, calories consumed, and so forth, are displayed on a single display screen 322, by navigation mode.

The user can confirm the history data of the selected mode on a single screen while traveling in each mode selected. For example, an arrangement may be made wherein the normal navigation display using a map or the like and the history display are switched in accordance with user operations. Also, what sort of history data to be displayed on the display screen 322 can be set in the above-described setting information beforehand. For example, the display items and display method may be changed for each navigation mode, so that the display items and display method change each time the navigation mode is switched.

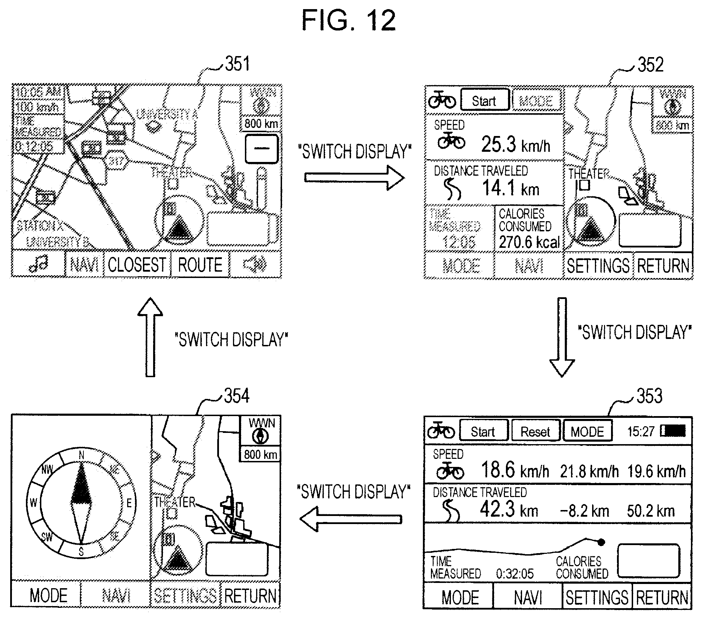

Now, switching of the display on the display unit 12 will be described with reference to Fig. 12. For example, as shown in Fig. 12, the navigation unit 118 may be made to perform display of navigation in which only the map data is displayed, as with the display example 351, to display of history data along with the map data, as with the display example 352. Also, the history data alone may be displayed as with the display example 353, or a compass indicating the bearing may be displayed along with the map, as with the display example 353.

For example, in the event that the vehicle mode has been selected, the default display may be a display of the map alone, with the default display in the case that the bicycle mode is selected being the map and history data. The default display items and display method may be changed for each navigation mode by setting in the above-described setting information beforehand.

As described above, the setting information may be information such as the scale information of the map for each navigation mode, audio information, screen brightness information, and so on, not just the data display method information for each navigation mode.

In the event that map scale information is stored as setting information, the navigation unit 118 can change the scale of the map in accordance with the navigation mode based on the setting information. For example, an arrangement may be made wherein the scale of the map is small in the vehicle mode so as to display a wide-area map, the scale is larger in the bicycle mode than in the vehicle mode so as to display a zoomed in map, and the scale is even larger in the pedestrian mode than in the bicycle mode so as to display an even more zoomed in map. Thus, a map of an appropriate range can be displayed for each navigation mode.

Also, in the event that audio volume information is stored as setting information, the navigation unit 118 can change the audio volume in accordance with the navigation mode, based on the setting information. For example, in the vehicle mode, an audio volume is used which is suitable for listening to guidance audio and so forth in a vehicle with hardly any noise, while in the case of the bicycle mode, the audio volume can be set which is suitable to listening outdoors without being a nuisance to others. Also, in the case of the pedestrian mode, the audio volume is set to that suitable for listening to guidance audio with earphones. Accordingly, guidance audio and the like can be provided at an audio volume suitable for each navigation mode.

Also, in the even that screen brightness information is set as setting information, the navigation unit 118 can change the screen brightness in accordance with the navigation mode based on the setting information. For example, in cases of navigation modes involving usage outdoors, such as the bicycle mode or pedestrian mode, the luminance of the display is set high, so as to be a luminance readily recognizable outdoors. Accordingly, maps and the like can be displayed at a screen brightness suitable for each navigation mode.

Also, the number of screen divisions for the display screen can be set for each navigation mode as setting information. For example, in the case of the vehicle mode, a wide-area map and a detailed map showing turns and so forth may be displayed at the same time. Also, power saving modes may be set for each navigation mode as setting information. For example, an arrangement may be made wherein, in the case of the bicycle mode, the display screen goes dark and goes into a power saving mode in the event that the user has not performed operations for a predetermined amount of time. Also, the search method for navigation may be set as setting information. For example, in the case of the vehicle mode, the path information to the destination is presented excluding bicycle paths. Also, in the case of the pedestrian mode, passages inaccessible to automobiles, such as footpaths, can be displayed as shortcuts.

Returning to Fig. 3, we will continue description of the functional configuration of the PND 10. The air pressure sensor 150 detects the ambient air pressure at a sampling frequency of 50 Hz, for example. The altitude calculating unit 152 calculates the current altitude based on the air pressure detected by the air pressure sensor 150.

The navigation unit 118 can perform navigation based on the current position calculated by the position obtaining unit 140 as described above, and the current altitude calculated by the altitude calculating unit 152.

Note that the method for obtaining the current position and so forth is not restricted to GPS measurement or the above-described method using sensors. For example, the current position can be obtained using the signal intensity of WiFi waves transmitted from base stations of a wireless LAN. More specifically, the PND 10 may estimate the distance to each base station from the reception intensity of the WiFi waves from each base station, and obtain the current position using the distance to each base station and the current position based on the principle of triangulation.

3-3. Detailed Operations of PND

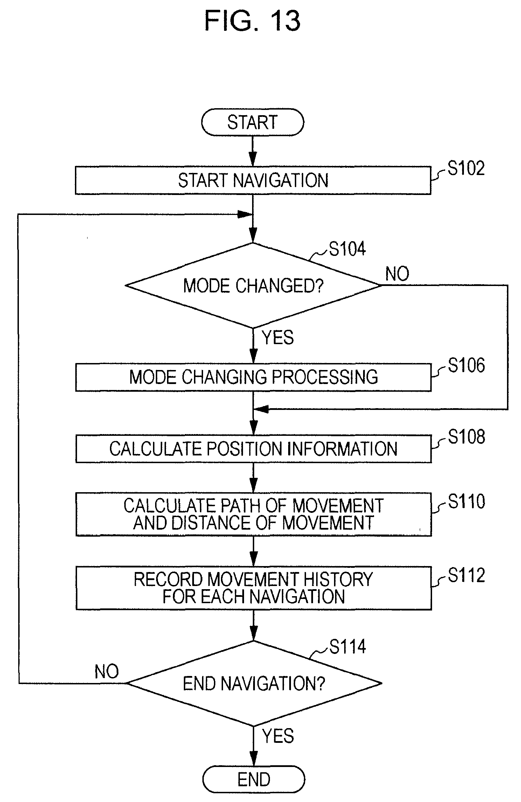

The functional configuration of the PND 10 has thus been described. Next, the details of the operations of the PND 10 according to the present embodiment will be described. Fig. 13 is a flowchart illustrating details of the PND 10 according to the present embodiment. As shown in Fig. 13, first, navigation is started in accordance with user operations (S102). In step S102, starting navigation means a navigation start button being pressed by user operations. For example, navigation may be started simply by the power button of the PND 10 being pressed, or navigation may be started by a destination being selected in accordance with user operations.

Determination is then made regarding whether or not the navigation mode has been changed by user operations by way of the operating unit (S104). In step S104, determination is made regarding whether or not the navigation mode has been switched by user operations while performing navigation, so that a navigation mode different from the navigation mode currently being executed has been selected.

In the event that determination is made in step S104 that the navigation mode has been changed, navigation mode changing processing is performed (S106). In step S106, the navigation mode changing processing involves obtaining setting information corresponding to navigation modes from the storage unit 108 and changing various settings, changing the destination of registration of movement history such as log data and history data and so forth. In step S104, in the event that determination is made that the navigation mode has not been changed, processing of step S108 and on is performed.

Position information is then calculated by the position obtaining unit 140 (S108). The movement history calculating unit 142 then calculates movement history information such as the movement path and movement distance and so forth, based on the position information calculated in step S108 (S110). The movement history information calculated in step S110 is then recorded by navigation mode (S112). For example, in the event that the navigation mode has been changed from vehicle mode to bicycle mode in step S106, the movement history calculated in step S110 is recorded in the storage unit 108 as movement history in the bicycle mode.

Determination is then made regarding whether or not to end navigation in accordance with user operations (S114). In the event that determination has been made in step S114 to end navigation, the processing ends. Also, in the event that determination has been made in step S114 not to end navigation, the processing from step S104 and on is repeated. In step S114, whether or not to end navigation is determined by whether a navigation end button displayed on the display screen has been pressed, or whether or not the power button of the PND 10 has been turned off.

Due to the above processing, the PND 10 can perform navigation in the navigation mode selected in accordance with user operations, record the history information by navigation mode, and so forth.

4. Second Embodiment

The PND 10 described in the first embodiment is only an example of the navigation device, and the navigation device is not restricted to this example. For example, the navigation device may be a cellular phone 20 which will be described below as the second embodiment. Aside from this, the navigation device may be a PHS (Personal Handyphone System) device, portable music player, portable video processing device, portable game terminal, portable imaging apparatus, or the like, detailed description of which will be omitted.

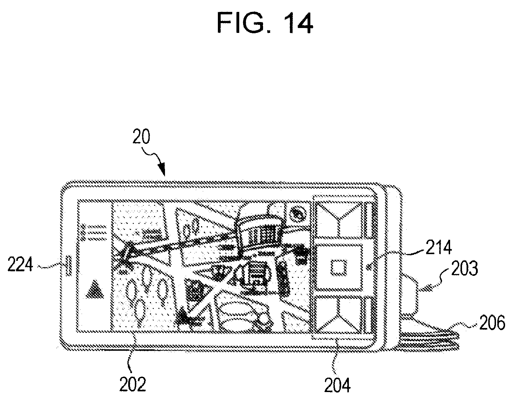

Fig. 14 is an external view of the cellular phone 20 according to the second embodiment. As shown in Fig. 14, the cellular phone 20 according to the second embodiment has a display unit 202, a cradle 203, an operation unit 204, a suction cup 206, a microphone 214, and a speaker 224.

In the same way as with the PND 10 according to the first embodiment, the cradle 203 is attached to the dashboard of the vehicle by way of the suction cup 206, and is mechanically and electrically connected to the cellular phone 20. Accordingly, the cellular phone 20 can operate using electric power supplied from the vehicle via the cradle 203. Note that the cellular phone 20 has a battery built in, and in the event of being removed form the cradle 203 can operate using power supplied from the battery.

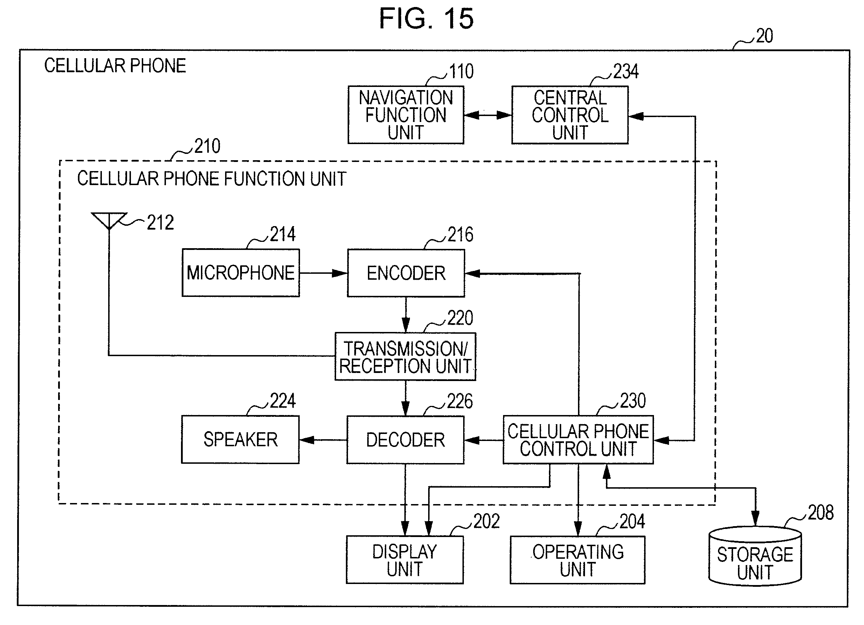

Fig. 15 is a functional block diagram illustrating the configuration of the cellular phone 20 according to the second embodiment. As shown in Fig. 15, the cellular phone 20 according to the second embodiment includes a navigation function unit 110, a display unit 202, an operation unit 204, a storage unit 208, a cellular phone function unit 210, and a central control unit 234.

Also, the cellular phone function unit 210 is for realizing calling functions and email functions and the like, and includes a communication antenna 212, a microphone 214, an encoder 216, a transmission/reception unit 220, a speaker 224, a decoder 226, and a cellular phone control unit 230. The navigation function unit 110 has been described with the first embodiment, so detailed description thereof will be omitted.

The microphone 214 collects sound and outputs as audio signals. The encoder 216 performs digital conversion and encoding and the like of the audio signals input from the microphone 214, and outputs the audio data to the transmission/reception unit 220, under control of the cellular phone control unit 230.

The transmission/reception unit 220 modulates the audio data input from the encoder 216 following a predetermined method, and wirelessly transmits from the communication antenna 212 to a base station of the cellular phone 20. Also, the transmission/reception unit 220 obtains audio data by demodulating wireless signals from the communication antenna 212, and outputs to the decoder 226.

The decoder 226 performs decoding and analog conversion of the audio data input from the transmission/reception unit 220, and outputs to the speaker 224, under control of the cellular phone control unit 230. The speaker 224 outputs audio based on the audio signals supplied from the decoder 226.

Also, in the event of receiving email, the cellular phone control unit 230 supplies the received data from the transmission/reception unit 220 to the decoder 226, so that the decoder 226 decodes the received data. The cellular phone control unit 230 then outputs the email data obtained by decoding to the display unit 202 so as to be displayed on the display unit, and also records the email data in the storage unit 208. Also, in the event of transmitting email, the cellular phone control unit 230 causes the encoder 216 to encode email data input via the operation unit 204, and wirelessly transmits via the transmission/reception unit 220 and communication antenna 212.

The central control unit 234 controls the cellular phone function unit 210 and the navigation function unit 110 described above. For example, in the event that a phone call is received while the navigation function unit 110 is executing navigation functions, the central control unit 234 may temporarily switch the navigation functions to the call functions with the cellular phone function unit 210, and following the call, cause the navigation function unit 110 to resume the navigation functions.

As described above, according to embodiments of the present invention, navigation is performed in a navigation mode selected in accordance to user operations. That is to say, navigation is performed using setting information set beforehand for each navigation mode, such as map scale, guidance audio volume, and so forth, in accordance with the selected navigation mode. Also, movement history information such as movement path and movement distance can be recorded in recording media (recording unit 108) and the movement history information can be displayed by navigation mode, thereby managing the movement history information for each navigation mode.

Preferred embodiments of the present invention have been described above with reference to the attached drawings, but the present invention is not restricted to these examples. It will be apparent to one with ordinary skill in the art that various modifications and alterations may be conceived within the technical scope laid forth in the Claims, and these are to be understood to be encompassed within the technical scope of the present invention as a matter of course.

For example, the steps in the processing of the navigation device such as the PND 10 or cellular phone 20 in the present specification do not necessarily have to be processed following the time sequence of the order described in the flowchart. For example, the steps in the processing of the navigation device such as the PND 10 or cellular phone 20 may be processed in an order different from that described in the flowchart, or may be processed in parallel.

Also, a computer program may be created to cause the hardware built into the navigation device such as the PND 10 or cellular phone 20 such as a CPU, ROM, RAM, and so forth, to exhibit functions equivalent to the components of the above-described navigation device. Also provided is a storage medium storing the computer program.

The present application contains subject matter related to that disclosed in Japanese Priority Patent Application JP 2009-298944 filed in the Japan Patent Office on December 28, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1.  An information processing apparatus including a navigation function, comprising:

    a processor configured to retrieve a previous navigation route taken by the information processing apparatus, retrieve mode information specifying at least one mode of transportation used on said previous navigation route, and store in a computer readable medium said previous navigation route in association with said mode information in a retrievable file.

2.  The information processing apparatus of claim 1, further comprising the computer readable medium, wherein said previous navigation route is a route that was actually traversed by the said information processing apparatus and a record of the route that was actually traversed being stored in the computer readable medium, said previous navigation route being part of a navigation history stored in the computer readable medium.

3.  The information processing apparatus of claim 2, wherein said navigation history includes at least one of distance and speed.

4.  The information processing apparatus of claim 1, 2 or 3, further comprising:

    a display that displays the retrievable file as one of a plurality of files that are user-selectable for graphical presentation on said display.

5.  The information processing apparatus of one of the claims 1 to 4, further comprising a user interface that provides user-selectable selection of a navigation mode from a plurality of navigation modes, wherein said processor is configured to graphically present on said user interface a new navigation route based on user-selectable input parameters, change said new navigation route to a different navigation route when the navigation mode is changed to a different navigation mode, and store in the computer readable medium a composite route that was actually traversed by said information processing apparatus, said composite route including a portion of said new navigation route and a portion of said different navigation route.

6.  The information processing apparatus of claim 5, wherein the user interface includes a display that includes a map image, a scale of said map image being changed in response to a change in the navigation mode.

7.  The information processing apparatus of one of the claims 1 to 6, wherein said information processing apparatus being a mobile navigation device.

8.  The information processing apparatus of one of the claims 1 to 6, wherein said information processing apparatus includes a cellular phone function unit.

9.  The information processing apparatus of one of the claims 1 to 7, wherein said mode information specifying at least one of a vehicle mode, a motorcycle mode, a bicycle mode and a pedestrian mode.

10. A method of capturing navigation information on an information processing apparatus, comprising:

    retrieving from a computer readable storage medium a previous navigation route taken by the information processing apparatus; retrieving mode information specifying at least one mode of transportation used on said previous navigation route; and storing with a processor in the computer readable storage medium said previous navigation route in association with said mode information in a retrievable file.

11. The method of claim 10, wherein said previous navigation route is a route that was actually traversed by the said information processing apparatus, and a record of the route that was actually traversed being stored in the computer readable storage medium, said previous navigation route being part of a navigation history stored in the computer readable medium..

12. The method of claim 10 or 11, wherein said navigation history includes at least one of distance and speed.

13. The method of claim 10, 11 or 12, further comprising:

    displaying on a display the retrievable file as one of a plurality of files that are user-selectable for graphical presentation on said display.

14. The method of one of the claims 10 to 13, further comprising:

    providing on a user interface a user-selectable selection mechanism that enables selection of a navigation mode from a plurality of navigation modes;

presenting on said user interface a new navigation route based on user-selectable input parameters, and changing said new navigation route when the navigation mode is changed to a different navigation mode; and

storing in the computer readable medium a composite route that was actually traversed by said information processing apparatus, said composite route including a portion of said new navigation route and a portion of said different navigation route.

15. A non-transitory computer readable storage device having instructions that when executed by a processor implement a method of capturing navigation information on an information processing apparatus, comprising:

retrieving from a computer readable storage medium a previous navigation route taken by the information processing apparatus;

retrieving mode information specifying at least one mode of transportation used on said previous navigation route; and

storing with a processor in the computer readable storage medium said previous navigation route in association with said mode information in a retrievable file.

# FIG. 1

EP 2 339 298 A2

FIG. 2

**FIG. 3**

EP 2 339 298 A2

FIG. 4

# FIG. 5

## FIG. 6

X AXIS

20

Y AXIS

22

Z AXIS

## FIG. 7

411

412

| MAIN UNIT MEMORY | EXTERNAL MEMORY |
|---|---|

root

log

| INTERNAL MEMORY |
|---|
| VEHICLE DRIVING LOG: REGION 1 |
| VEHICLE DRIVING LOG: REGION 2 |
| PEDESTRIAN WALKING LOG: REGION 1 |
| VEHICLE DRIVING LOG: REGION 3 |
| BICYCLE RIDING LOG: REGION 1 |
| BICYCLE RIDING LOG: REGION 2 |
| PEDESTRIAN WALKING LOG: REGION 2 |

20090825a_1.log
20090901a_2.log
20090905b_1.log
20090906a_3.log
20090922c_1.log
20091001c_2.log
20091023c_2.log

# FIG. 8

EXTERNAL MEMORY ~413

root

log

~414

20090825a_1.log
20090901a_2.log
20090905b_1.log
20090906a_3.log
20090922c_1.log
20091001c_2.log
20091023c_2.log

~415

20090825a_1.csv
20090901a_2.csv
20090905b_1.csv
20090906a_3.csv
20090922c_1.csv
20091001c_2.csv
20091023c_2.csv

FIG. 9

EP 2 339 298 A2

# FIG. 10

~321

BICYCLE RIDING HISTORY

322

2009/10/14

🕐 57 MINUTES ▯ 10 km

2009/10/8

🕐 31 MINUTES ▯ 16 km

2009/9/26

🕐 24 MINUTES ▯ 4 km

2009/9/5

🕐 2 HOURS 35 MINUTES ▯ 30 km

△

▽

ACCUMULATED DISTANCE 546872 km

RESET

DELETE

↩

# FIG. 11

322

| 2009/9/15 |
| --- |

DISTANCE TRAVELED  **108132** km  ELEVATION

851 m

15 m

| AVERAGE SPEED | MAXIMUM SPEED |
| --- | --- |
| **25.** 3 km/h | **32.** 9 km/h |

TIME MEASURED  12:05:59    CALORIES CONSUMED  35270.6 kcal

◁    99.99    ▷    ↩

# FIG. 12

EP 2 339 298 A2

# FIG. 13

```
                    ┌──────────┐
                    │  START   │
                    └────┬─────┘
                         ▼
        ┌─────────────────────────────────────┐  ⟋S102
        │         START NAVIGATION            │
        └────────────────┬────────────────────┘
                         ▼
                    ⟋S104
              ◇                    ◇
         ◇                              ◇   NO
        ◇        MODE CHANGED?           ◇──────────┐
         ◇                              ◇           │
              ◇                    ◇                │
                    │ YES                           │
                    ▼                               │
        ┌─────────────────────────────────────┐  ⟋S106   │
        │       MODE CHANGING PROCESSING      │          │
        └────────────────┬────────────────────┘          │
                         ▼◄──────────────────────────────┘
        ┌─────────────────────────────────────┐  ⟋S108
        │      CALCULATE POSITION INFORMATION │
        └────────────────┬────────────────────┘
                         ▼
        ┌─────────────────────────────────────┐  ⟋S110
        │      CALCULATE PATH OF MOVEMENT     │
        │       AND DISTANCE OF MOVEMENT      │
        └────────────────┬────────────────────┘
                         ▼
        ┌─────────────────────────────────────┐  ⟋S112
        │      RECORD MOVEMENT HISTORY        │
        │       FOR EACH NAVIGATION          │
        └────────────────┬────────────────────┘
                         ▼
                    ⟋S114
              ◇                    ◇
    NO   ◇                              ◇
  ───◇        END NAVIGATION?           ◇
         ◇                              ◇
              ◇                    ◇
                    │ YES
                    ▼
              ┌──────────┐
              │   END    │
              └──────────┘
```

# FIG. 14

## FIG. 15

CELLULAR PHONE ~20

CELLULAR PHONE

NAVIGATION FUNCTION UNIT ~110

CENTRAL CONTROL UNIT ~234

CELLULAR PHONE FUNCTION UNIT ~210

212

MICROPHONE ~214

ENCODER ~216

TRANSMISSION/ RECEPTION UNIT ~220

SPEAKER ~224

DECODER ~226

CELLULAR PHONE CONTROL UNIT ~230

DISPLAY UNIT ~202

OPERATING UNIT ~204

STORAGE UNIT ~208

EP 2 339 298 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 20013179472 B
- JP 2002031538 A
- JP 2009298944 A